# FASCICULE DE BREVET EUROPEEN

(11) **EP 3 166 828 B1**
(45) Date de publication et mention de la délivrance du brevet: **03.05.2023**
(21) Numéro de dépôt: 15728046.2
(22) Date de dépôt: 04.05.2015
(51) Int. Cl.: B60W 20/00, B60W 10/10, B60W 50/08, F16H 61/02

(54) **PROCÉDÉ DE SÉLECTION DE LA CONSIGNE D'ÉTAT D'UNE CHAÎNE CINÉMATIQUE**
VERFAHREN ZUR AUSWAHL DES ZIELZUSTANDS EINES ANTRIEBSSTRANGS
METHOD FOR SELECTING THE TARGET STATE OF A DRIVE TRAIN

(30) Priorité: 10.07.2014 FR 1456667
(43) Date de publication de la demande: 17.05.2017
(73) Titulaire: Renault s.a.s, 92100 Boulogne Billancourt (FR); Nissan Motor Co., Ltd., Kanagawa 220-8623 (JP)
(72) Inventeur: PLANCHE, Gregory, F-91400 Orsay (FR); ROUDEAU, Frédéric, F-94400 Vitry-sur-Seine (FR)
(74) Mandataire: Renault Group
(86) Numéro de dépôt international: PCT/FR2015/051178
(87) Numéro de publication internationale: WO 2016/005668

(56) Documents cités:
- WO-A1-2004/030974
- WO-A1-2012/000806
- AT-U1- 9 756
- DE-A1- 19 932 492
- FR-A1- 2 911 567

## Description

La présente invention concerne les stratégies de contrôle implémentées dans les unités de calcul des groupes motopropulseurs (GMP).

Elle trouve une application privilégiée sur des groupes motopropulseurs comprenant au moins un moteur thermique et une machine électrique de traction.

Plus précisément, cette invention a pour objet un procédé de sélection de la consigne d'état d'une chaîne cinématique de véhicule reliant au moins un moteur thermique et une machine électrique aux roues du véhicule par l'intermédiaire d'une transmission, parmi un ensemble d'états présents sur la transmission. Ces états sont définis par différentes combinaisons de coupleurs et de réducteurs, pour assurer le transfert du couple du moteur thermique et de la machine électrique en direction des roues, sur un ou plusieurs rapports de démultiplication.

L'état d'une chaîne cinématique peut se définir par une combinaison de coupleurs et de réducteurs sollicités. La consigne d'état de la chaîne cinématique, vise à optimiser le point de fonctionnement du GMP. Sur un GMP thermique, un état de chaîne cinématique peut être simplement défini par l'engagement d'un rapport et la position (ouverte ou fermée) d'un embrayage d'entrée entre le moteur et la boîte. Sur un GMP hybride, sa définition est forcément plus complexe, parce qu'elle doit intégrer l'état d'une machine électrique qui peut propulser le véhicule par le même, ou par un autre, essieu, que le moteur thermique.

L'élaboration de la consigne d'état de la chaîne cinématique, recherche un compromis entre des prestations d'acoustique, d'agrément de conduite, de consommation et de dépollution.

Par la publication US 8 055 417, on connaît une méthode de sélection du rapport optimal de transmission sur un GMP thermique, en fonction de certaines contraintes, pesant sur le rapport cible, comme le régime du moteur sur celui-ci, les régimes minimaux et maximaux du moteur, la puissance disponible maximum sur chacun des rapports, la demande de puissance du conducteur, et la consommation de carburant associée.

Cette méthode ne prévoit pas la gestion de plusieurs modes énergétiques. Pour cette raison, elle n'est pas transposable sur un GMP hybride, car pour une même puissance souhaitée il existe généralement plusieurs répartitions de puissance possibles, entre le moteur thermique, et le(s) moteur(s) électrique(s). De plus, la puissance de la machine électrique peut transiter ou non par la transmission. Le mode électrique (ZEV pour *zéro Emission Vehicle*) est un nouvel état GMP à prendre en compte, au même titre que les rapports thermiques et hybrides.

Sur un véhicule hybride, d'autres considérations peuvent entrer en jeu, dans la gestion des modes de fonctionnement et des rapports de transmission. Comme indiqué ci-dessus, le comportement acoustique du véhicule dépend, entre autres, de la répartition entre la puissance électrique et puissance thermique. L'agrément de conduite, lié aux performances du GMP, dépend aussi de l'état de charge de la batterie, puisque seul le moteur thermique est utilisable lorsqu'elles sont déchargées. Enfin, les lois de gestion d'énergie (LGE), qui déterminent sur chaque point de fonctionnement la répartition de puissance en respectant les contraintes de consommation et de dépollution, de même que la consigne de rapport de la transmission, doivent également tenir compte de l'état de charge de la batterie.

Les états d'une chaîne cinématique de véhicule hybride peuvent être définis par une combinaison de(s) coupleur(s) et de réducteur(s) spécifiques à une architecture véhicule donnée. Ces combinaisons sont plus nombreuses que sur une transmission classique, puisqu'ils intègrent le couplage additionnel d'un ou de plusieurs moteurs électriques propulsant le véhicule sur le même essieu que le moteur thermique ou non. Sur un véhicule hybride, les méthodes d'élaboration connues s'avèrent incapables d'optimiser simultanément la consommation et la dépollution, avec l'agrément et l'acoustique.

La publication AT 9 9756, décrit une méthode de contrôle de véhicule hybride qui se décompose en plusieurs modules de calcul, permettant, à partir du souhait du conducteur, de déterminer le mode de fonctionnement le plus approprié pour le véhicule.

La présente invention vise à réaliser un arbitrage entre les différentes contraintes d'acoustique, d'agrément de conduite, de consommation et de dépollution pesant sur un véhicule hybride, pour élaborer une consigne d'état de sa chaîne cinématique.

Dans ce but, elle propose un procédé de sélection de sa consigne d'état tel que défini par la revendication 1.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 est une représentation globale de la stratégie de filtrage liée à l'agrément,
- la figure 2 décrit l'initialisation d'un vecteur d'éligibilité d'état, et la prise en compte d'états de chaîne cinématique dysfonctionnels,
- la figure 3 montre le mécanisme de filtrage lié à l'Interface Homme Machine et au mode énergétique requis,

- la figure 4 détaille le filtrage lié aux contraintes de vitesses,

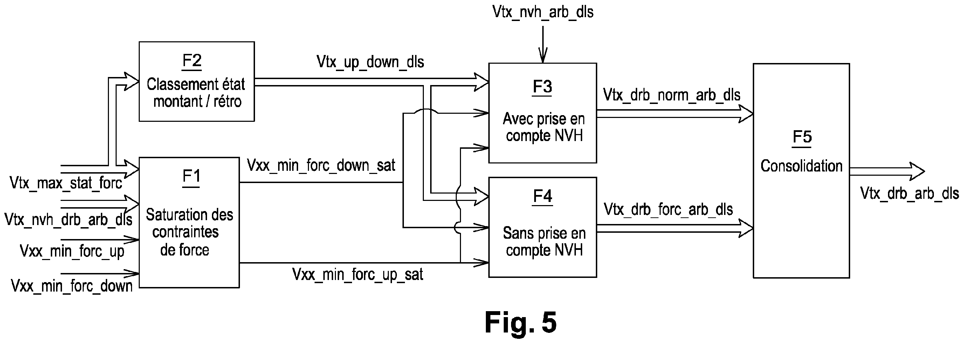

- et la figure 5 détaille le filtrage lié aux contraintes de forces.

Le procédé de sélection décrit ci-dessous, concerne la consigne d'état d'une chaîne cinématique de véhicule reliant au moins un moteur thermique et une machine électrique aux roues du véhicule par l'intermédiaire d'une transmission. Cet état est sélectionné parmi un ensemble d'états présents sur la transmission, définis par différentes combinaisons de coupleurs et de réducteurs de celle-ci pour assurer le transfert du couple du moteur thermique et de la machine électrique en direction des roues sur un ou plusieurs rapports de démultiplication.

Ce procédé s'applique sur l'ensemble des architectures hybbrides.

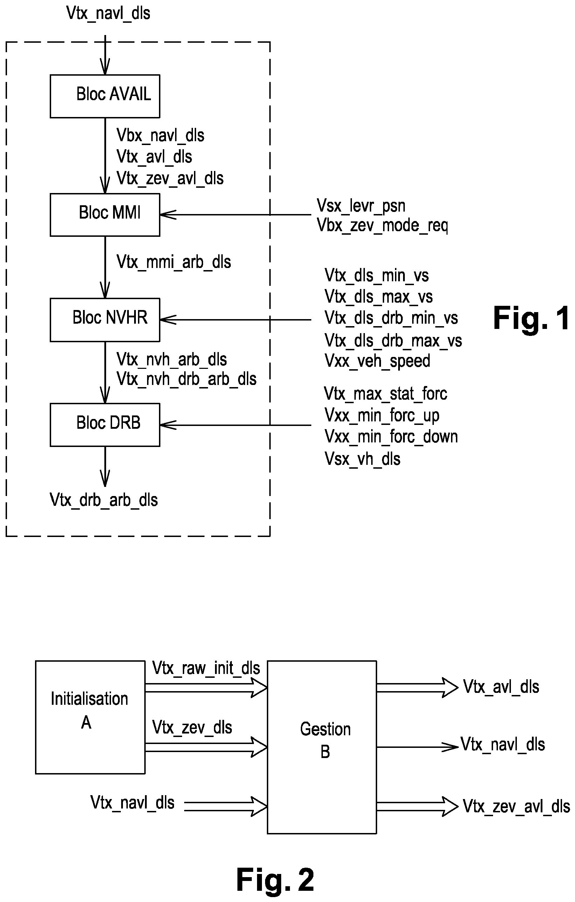

La sélection de la consigne d'état respecte une séquence de filtrages déterminant, à partir d'une liste d'états disponibles, des ensembles d'état éligibles successifs, en fonction des contraintes d'agrément cumulées. La séquence proposée est illustrée par la figure 1, sur laquelle on distingue une première étape (Bloc AVAIL) d'initialisation du vecteur d'éligibilité et de prise en compte des états indisponibles, une deuxième étape de filtrage (Bloc MMI) liée à l'interface homme machine du conducteur et au mode énergétique engagé, une deuxième étape de filtrage lié à l'Interface Homme Machine du conducteur et au mode énergétique engagé, une troisième étape de filtrage liée au limites de vitesses imposées par le niveau vibratoire et les contraintes mécaniques (Bloc NVHR), et une dernière étape de filtrage liée aux contraintes de forces (Bloc DRB).

Le premier bloc, ou étape de filtrage AVAIL, reçoit en entrée la liste ***Vtx_navl_dls*** pour « *Unavailable Driveline State* » des états indisponibles, pour une raison dysfonctionnelle, ou par construction. Ses trois vecteurs de sortie sont :
- ***Vbx_navl_dls*,** pour « *Unavailable Driveline State Presence* », qui signale la présence de dysfonctionnement sur certains états de l'architecture de transmission concernée,
- ***Vtx_avl_dls,*** pour « *Available Driveline State »,* qui donne la liste complémentaire des états de chaînes cinématiques disponibles ou non,
- ***Vtx_zev_avl_dls*,** pour « *ZEV Available Driveline State* », qui définit, à partir du précédent, les états autorisés en mode tout électrique (ou mode ZEV pour *Zéro Emission Vehicle*).

Ces trois vecteurs sont transmis au bloc suivant (Bloc MMI), qui reçoit également deux autres vecteurs traduisant les demandes du conducteur :
- ***Vsx_levr_psn,*** pour « *Lever Position* », qui indique la position levier (Neutre, Reverse, Drive), et
- ***Vbx_zev_mode_req***, pour « *Zev Mode Request* », qui indique que le mode tout électrique est requis.

Le signal de sortie du bloc MMI est le vecteur ***Vtx_mmi_arb_dls,*** pour « *Driveline states Man Machine Interface Arbitration* », qui définit les états éligibles après le filtrage lié à l'Interface Homme Machine, et au mode énergétique requis.

Ce dernier vecteur est transmis au bloc de filtrage lié aux limites de vitesses et aux contraintes mécaniques (Bloc NVHR), qui reçoit par ailleurs les informations suivantes :
- ***Vtx_dls_min_vs*,** pour « *Driveline State Blocking Minimal Vehicule Speed* », vecteur introduisant les vitesses minimales pour chaque état, en considérant la fiabilité mécanique des organes et les contraintes vibratoires (NVH pour *Noise Vibration and Harshness*),
- ***Vtx_dls_max_vs,*** pour « *Driveline State Blocking Maximal Vehicule Speed* », indiquant les vitesses maximales pour chacun des états, en considérant la fiabilité mécaniques des organes et les contraintes NVHft.
- ***Vtx_dls_drb_min_vs**,* pour « *Driveline State Blocking Minimal Vehicule Speed* », indiquant les vitesses minimales de fonctionnement de chaque état.
- ***Vtx_dls_drb_max_vs,*** pour « *Driveline State Blocking Maximal Vehicule Speed* », donnant les vitesses maximales de fonctionnement de chaque état, et
- ***Vxx_veh_speed,*** pour « *Vehicle Speed »,* qui représente la vitesse du véhicule.

En sortie, on a deux nouveaux vecteurs :
- ***Vtx_nvh_arb_dls,*** pour « *Driveline States NVH Arbitration* », qui définit les états éligibles après le filtrage lié aux contraintes de vitesses (Fiabilité et NVH), et
- ***Vtx_nvh_drb_arb_dls,*** pour « *Driveline States NVH Arbitration for Driveability* »*,* définissant les états éligibles après le filtrage liés aux contraintes de vitesses (Fiabilité et plages de vitesses définies).

Ces deux vecteurs subissent un filtrage lié aux contraintes de force dans le bloc DRB avec en nouvelles entrées :
- ***Vtx_max_stat*_*****forc,*** pour « *Maximal Static Forces »* et définit l'ensemble des forces maximales réalisables pour chacun des états chaînes cinématiques.
- ***Vxx_min_forc_up*** pour « *Minimal force for up »,* contrainte de force à satisfaire pour les états chaînes cinématiques dits « montants »,
- ***Vxx_min_forc_down*** pour « *Minimal force for down »,* contrainte de force à satisfaire pour les états dits « rétros ou de rétrogradage ».
- ***Vsx_vh_dls,*** pour « *Vehicle Driveline State* », état engagé.

Le vecteur final est ***Vtx_drb_arb_dls,*** qui signifie « *Driveline State Driveability arbitration* ». Il regroupe les états de chaîne cinématique éligibles après le dernier filtrage lié aux contraintes de forces, à l'issue de la stratégie de filtrage complète, liée aux contraintes d'agréments.

Le bloc AVAIL, d'initialisation du vecteur d'éligibilité et de prise en compte des états dysfonctionnels est détaillé sur la figure 2. Son premier module A est une étape d'initialisation des états disponibles en mode électrique ou ZEV (*Zero Emission Vehicle*), et hors mode ZEV. Cette étape définit par calibration deux vecteurs liés à l'architecture de la chaîne cinématique. Cette initialisation « en dur » des états disponibles en mode ZEV et hors mode ZEV, produit des vecteurs intermédiaires :
- ***Vtx_raw_init_dls,*** qui représente les états disponibles, et
- ***Vtx_zev_dls,*** qui représente les états disponibles en mode tout électrique (ZEV).

Le vecteur des états chaînes cinématiques disponibles, ***Vtx_avl_dls*** est défini en fonction du vecteur ***Vtx_raw_init_dls*** et du vecteur ***Vtx_navl_dls*** dans le deuxième module B de gestion des états dysfonctionnels. Trois cas de figure se présentent pour un même état :
- cet état est non existant et/ou non fonctionnel : il n'est pas éligible : la valeur d'éligibilité du vecteur ***Vtx_avl_dls*** liée à cet état est égale à FAUX ;
- cet état existe, mais n'est pas fonctionnel, il n'est pas éligible : la valeur d'éligibilité du vecteur ***Vtx_avl_dls*** liée à cet état est égale à FAUX ;
- cet état existe et est disponible : il est éligible et la valeur d'éligibilité du vecteur ***Vtx_avl_dls*** liée à cet état est égale à VRAI.

Si un état existe sans être fonctionnel, le booléen ***Vbx_navl_dls*** mentionné plus haut est « VRAI » afin d'adapter les contraintes de forces et de vitesses en conséquence.

Le vecteur ***Vtx_zev_avl_dls*** est construit à partir des vecteurs d'éligibilité ***Vtx_avl_dls*** et ***Vtx_zev_dls.*** Un état est jugé éligible en mode tout électrique si, et seulement si, il a été défini comme tel par calibration, il est présent, et il est fonctionnel.

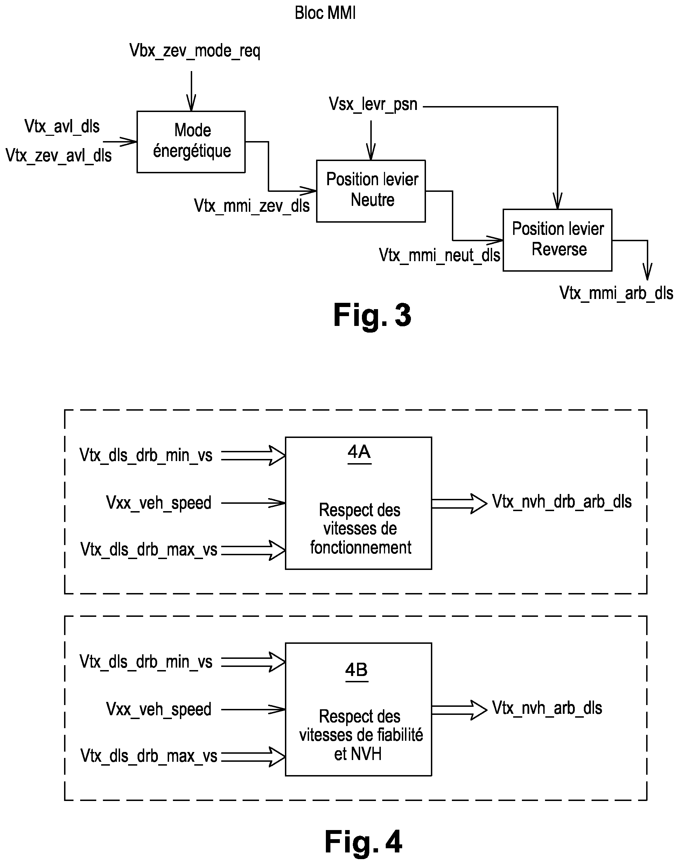

Le bloc MMI de filtrage lié à l'Interface Homme Machine et au mode énergétique requis, est illustré par la figure 3. Il a pour rôle de définir l'éligibilité des états en fonction de la position du levier de vitesses et du mode énergétique requis. Sa première étape de filtrage est liée au mode tout électrique (ZEV). Il reçoit les vecteurs ***Vtx_avl_dls Vtx_zev_avl_dls*** du bloc précédent, ainsi que la requête de mode électrique ***Vbx_zev_mod_req.*** Son vecteur d'éligibilité résultant est ***Vtx_mmi_zev_dls.*** Si ***Vbx_zev_mode_reg*** = VRAI, le vecteur d'éligibilité utilisé pour le reste du filtrage sera ***Vtx_zev_avl_dls,*** qui représente les états chaînes cinématiques éligibles ou non en mode tout électrique. Dans le cas contraire **(*Vbx_zev_mode_req*** = FAUX), c'est le vecteur d'éligibilité ***Vtx_avl_dls*** qui est utilisé.

La deuxième étape du bloc MMI est le filtrage lié à la position Neutre du levier (***Vsx_levr_psn***), dont le vecteur d'éligibilité résultant est ***Vtx_mmi_neut_dls*** :
- si ***Vsx_levr_psn*** = ***Nsx_levr_neut*** (Position neutre), seul l'état neutre du vecteur est VRAI et les autres états chaînes cinématiques sont FAUX,
- si ***Vsx_levr_psn*** est différent de ***Nsx_levr_neut***, les états éligibles restent ceux définis précédemment par le vecteur d'éligibilité ***Vtx_mmi_zev_dls.***

La dernière étape du bloc MMI est un filtrage lié à la position Marche Arrière du levier ***Vsx_levr_psn,*** dont le vecteur d'éligibilité résultant est ***Vtx_mmi_arb_dlbs**.* Si ***Vsx_levr_psn*** = ***Nsx_levr_rvr*** (Position marche arrière), l'ensemble des états de marche arrière (mécaniques et électriques) et neutre, regroupés dans le vecteur ***Vtx_mmi_neut_dls,*** sont conservés. Les autres états ont un statut d'éligibilité égal à FAUX dans le vecteur d'éligibilité résultant ***Vtx_mmi_arb_dls.*** Dans le cas où ***Vsx_levr_psn*** = ***Nsx_levr_rvr*** le vecteur ***Vtx_mmi_arb_dls*** est strictement égal au vecteur ***Vtx_mmi_neut_dls.*** Le vecteur d'éligibilité ***Vtx_mmi_arb_dls*** obtenu en sortie du bloc MMI, définit l'ensemble des états éligibles ou non en fonction de la position du levier et du mode énergétique requis.

Le bloc NVHR, de filtrage lié aux contraintes de vitesses (Fiabilité et NVH), illustré par la figure 4, a pour but de définir les états respectant ou non des contraintes de vitesse minimale et maximale. Dans ce bloc, deux filtrages se déroulent en parallèle, et produisent les vecteurs d'éligibilité ***Vtx_nvh_arb_dls*** et ***Vtx_nvh_drb_arb_dls.***

Le bloc 4A a pour rôle de définir les états chaînes cinématiques éligibles ou non à une vitesse véhicule donnée, en ne considérant que l'aspect de fiabilité et les plages de vitesses de fonctionnement définies. Il vérifie si les plages de fonctionnement (régimes minimaux et maximaux des organes) seraient respectées à la vitesse véhicule courante pour chacun des états éligibles, afin d'éviter tout risque de surrégime ou de sous-régime. Pour chaque état, la vitesse courante ***Vxx_veh_speed*** est comparée aux seuils minimal et maximal, propres à cet état, respectivement définis dans les vecteurs ***Vtx_dls_drb_min_vs*** et ***Vtx_dls_drb_max_vs.***

Si la vitesse courante est comprise entre sa vitesse minimale et sa vitesse maximale, l'état est éligible. Le statut d'éligibilité précédemment déterminé dans ***Vtx_mmi_arb_dls*** est conservé. Si la vitesse courante est en dehors de ses bornes de fiabilité, l'état est inéligible. Son statut d'éligibilité passe à FAUX, dans le vecteur résultant ***Vtx_nvh_drb_arb_dls.***

Le bloc 4B vérifie en parallèle que les différents états éligibles respectent aussi les limites vibratoires. Il s'assure que la vitesse courante sur chaque états éligibles du (***Vtx_mmi_arb_dls***) respecte les vitesses minimales et maximales admissibles sur ces états pour leur niveau vibratoire (*Noise Vibration and Harshness*)*.* Ces limites sont définies au travers des vecteurs ***Vtx_dls_min_vs*** et ***Vtx_dls_max_vs.*** Lorsque la vitesse courante est comprise entre ces bornes, seuls leurs statuts d'éligibilité précédemment définis dans ***Vtx_mmi_arb_dls*** sont conservés dans le vecteur résultant ***Vtx_nvh_arb_dls.*** Dans le cas contraire, l'état est inéligible, et son statut d'éligibilité devient égal à FAUX dans le vecteur d'éligibilité résultant ***Vtx_nvh_arb_dls.***

Le bloc DRB de filtrage lié aux contraintes de forces, a pour but de définir les états pouvant satisfaire les différentes contraintes définies par les contraintes d'agréments, en plus des filtrages effectués précédemment. La première étape F1 du bloc DRB sature les contraintes de force à un niveau de force maximale réalisable, afin de ne pas rendre inéligibles dans certaines situations des états éligibles selon les étapes précédentes. Ce mécanisme compare les forces maximales disponibles sur chaque état éligible dans leur plage de fonctionnement, pour saturer les contraintes de forces sur la plus élevée d'entre elles. Il intervient par exemple sur une route à forte déclivité qui nécessite une forte réserve d'accélération (de force), supérieure au potentiel des états éligibles aux étapes précédentes. En l'absence de saturation, l'ensemble des états peuvent alors devenir inéligibles, mis à part l'état neutre.

La force maximale disponible sur l'ensemble des états, est calculée à partir des vecteurs ***Vtx_max_stat_forc*** et ***Vtx_nvh_drb*_*****arb_dls.*** Si un état est éligible dans le vecteur ***Vtx_nvh_drb_arb_dls,*** c'est-à-dire sur sa plage de fonctionnement, la force maximale disponible sur cet état (et définie dans le vecteur ***Vtx_max_stat_forc***) est comparée aux autres forces maximales des états eux aussi disponibles, dans leurs plages de fonctionnement. Les contraintes de forces ***Vxx_min_forc_up*** et ***Vxx_min_forc_down*** sont alors saturées à la force la plus élevée. Les contraintes de forces saturées se nomment respectivement ***Vxx_min_forc_up_sat*** et ***Vxx_min_forc_down_sat.***

La deuxième étape F2 du bloc DRB, concerne la reconnaissance des rétrogradages ou des passages montants, par rapport à l'état courant. Les informations contenues dans le vecteur résultant ***Vtx_up_down_dls*** permettent de définir les contraintes de forces à respecter pour chacun des états. Ce vecteur définit trois classifications distinctes pour chaque état de la chaîne cinématique : « rétro », « courant », ou « montant ».

La troisième étape F3 du bloc DRB est un mécanisme de filtrage avec prise en compte du niveau vibratoire NVH. Ce mécanisme a pour but de définir les états éligibles ou non quant aux contraintes de forces. Le respect des contraintes de forces n'est vérifié que sur des états dits de « traction », à savoir l'ensemble des états excepté les différentes marches arrière et l'état neutre. Trois cas se présentent :
- l'état est « montant » : sa force maximale définie dans le vecteur ***Vtx_max_stat_forc*** est comparée à la contrainte de force ***Vxx_min_fore_up_sat*** ;
- l'état est « rétro » : sa force maximale définie dans le vecteur ***Vtx_max_stat_forc*** est comparée à la contrainte de force ***Vxx_min_forc_down_sat*** ;
- l'état est courant : sa force maximale définie dans le vecteur ***Vtx_max_stat_forc*** est comparée à la force minimale entre ***Vxx_min_foc_down_sat*** et ***Vxx_min_forc_up_sat.***

Dans chacun des cas, si la force maximale de l'état est supérieure à sa contrainte de force, il est éligible. Son statut d'éligibilité défini dans le vecteur d'éligibilité ***Vtx_nvh_arb_dls*** est conservé dans le vecteur d'éligibilité résultant ***Vtx_drb_norm_arb_dls.*** Dans le cas contraire, son statut d'éligibilité devient égal à FAUX dans le vecteur ***Vtx_drb**_**norm_arb_dls.*** Pour les marches arrière et le neutre, les statuts d'éligibilité définis dans ***Vtx_nvh_arb_dls*** sont conservés sans aucune condition dans le vecteur d'éligibilité ***Vtx_drb_norm_arb_dls.*** Ainsi le vecteur obtenu ***Vtx_drb_norm_arb_dls*** représente les états chaînes cinématiques éligibles ou non en prenant en compte l'ensemble des contraintes de la stratégie globale de filtrage : les états disponibles et fonctionnels, les contraintes IHM, les contraintes de mode énergétique, les contraintes de vitesses en fiabilité et NVH, et les contraintes de forces.

La quatrième étape F4 du bloc DRB, est un mécanisme de filtrage sans prise en compte du niveau vibratoire NVH. Son fonctionnement est strictement identique au précédent. L'unique différence réside dans le fait que le vecteur d'éligibilité ***Vtx_nvh*_*drb*_*****arb**_**dls*** est utilisé en lieu et place du vecteur d'éligibilité ***Vtx_nvh*_*****arb**_**dls,*** et que le vecteur d'éligibilité résultant est ***Vtx_drb*_*forc_arb_dls.*** Ce vecteur représente les états chaînes cinématiques respectant l'ensemble des contraintes d'agrément, à l'exception des contraintes NVH.

Le cinquième bloc F5 est un mécanisme de consolidation final entre les vecteurs d'éligibilité ***Vtx_drb***_***norm_arb**_**dls*** et ***Vtx_drb*_*forc_arb_dls*.** Cette consolidation a pour but de satisfaire les contraintes de forces en priorité face aux contraintes NVH dans le cas où aucun des états ne peut respecter à la fois les contraintes de forces et les contraintes NVH. Si l'ensemble des états, sauf le neutre, sont inéligibles selon le vecteur d'éligibilité ***Vtx_drb_norm_arb_dls,*** le vecteur d'éligibilité final est égal à ***Vtx_drb_forc_arb_dls.*** Le procédé répond ainsi aux requêtes de forces dans toutes les situations où les contraintes NVH ne permettraient pas d'autoriser un état de « traction ». Dans le cas contraire, le vecteur d'éligibilité final ***Vtx_drb**_**arb**_**dls*** est égal à ***Vtx_drb*_*****norm_arb**_**dls,*** qui est le fonctionnement nominal avec prise en compte de l'ensemble des contraintes d'agrément. Le vecteur d'éligibilité final ***Vtx_drb**_**arb**_**dls*** représente l'ensemble des états éligibles ou non d'un point de vue agrément.

Le procédé de l'invention présente de nombreux avantages, dont les principaux sont sa facilité de mise en œuvre, et sa rapidité de mise au point. Ce procédé est applicable sur toutes les architectures hybrides équipées d'une boîte de vitesse automatique. Ce procédé peut être couplé à une loi de gestion énergétique (LGE) notamment de véhicule hydride. Il permet d'optimiser la consommation et la dépollution, ainsi que l'agrément et l'acoustique d'un véhicule.

## Revendications

1. Procédé de sélection de la consigne d'état d'une chaîne cinématique de véhicule reliant au moins un moteur thermique et une machine électrique aux roues du véhicule par l'intermédiaire d'une transmission, parmi un ensemble d'états présents sur la transmission, définis par différentes combinaisons de coupleurs et de réducteurs de celle-ci pour assurer le transfert du couple du moteur thermique et de la machine électrique en direction des roues sur un ou plusieurs rapports de démultiplication, la sélection de la consigne d'état respectant une séquence de filtrages déterminant à partir d'une liste d'états disponibles (***Vtx_avl_dls***), des ensembles d'état éligibles successifs en fonction des contraintes d'agrément cumulées, **caractérisé en ce qu'**il comporte successivement :
- une première étape d'initialisation d'un vecteur d'éligibilité et de prise en compte des états disponibles,
- une deuxième étape de filtrage liée à une interface homme machine du conducteur et au mode énergétique engagé,
- une troisième étape de filtrage liée aux contraintes de vitesses, et
- une quatrième étape de filtrage liée aux contraintes de forces de la chaîne cinématique,
et **en ce que** à l'issue de toutes les étapes de filtrage, il produit un vecteur d'éligibilité final (***Vtx_drb_arb_dls***) qui représente l'ensemble des états éligibles en fonction des contraintes d'agrément.

2. Procédé de sélection selon la revendication 1, **caractérisé en ce que** la première étape de filtrage délivre un vecteur (***Vbx_navl_dls***), signalant la présence de dysfonctionnement sur certains états, un vecteur (***Vtx_avl_dls***), donnant la liste complémentaire des états disponibles, et un vecteur (***Vtx_zev_avl_dls***), définissant les états autorisés en mode tout électrique.

3. Procédé de sélection selon la revendication 2, **caractérisé en ce que** la deuxième étape de filtrage délivre un signal de sortie **(*Vtx_mmi_arb_dls*),** qui définit les états éligibles en fonction de la position du levier de vitesses et du mode énergétique requis.

4. Procédé de sélection selon la revendication 3, **caractérisé en ce que** la quatrième étape de filtrage compare la vitesse courante aux seuils minimal et maximal, propres à chaque état éligible du vecteur (***Vtx_mmi_arb_dls***).

5. Procédé de sélection selon la revendication 4, **caractérisé en ce que** la quatrième étape vérifie en parallèle que la vitesse courante sur chaque état éligible du vecteur (***Vtx*_*mmi_arb_dls***) respecte les vitesses minimale et maximale admissibles sur ces états pour leur niveau vibratoire.

6. Procédé de sélection selon l'une des revendications précédentes, **caractérisé en ce que** la quatrième étape comporte un mécanisme de saturation des contraintes de forces sur la force la plus élevée qui compare les forces maximales disponibles sur chaque état éligible sur leur plage de fonctionnement pour saturer les contraintes de forces sur la plus élevée d'entre elles.

7. Procédé de sélection selon l'une des revendications 1 à 5, **caractérisé en ce que** la quatrième étape comporte un mécanisme de reconnaissance des états montants ou rétros et de l'état courant.

8. Procédé de sélection selon l'une des revendications 1 à 5, **caractérisé en ce que** la quatrième étape comporte un mécanisme de filtrage avec prise en compte du niveau vibratoire sur l'ensemble des états éligibles, excepté sur les différentes marches arrière et l'état neutre.

9. Procédé de sélection selon la revendication 1 à 5, **caractérisé en ce que** la quatrième étape comporte un mécanisme de filtrage sans prise en compte du niveau vibratoire délivrant un vecteur qui représente les états de la chaîne cinématique respectant l'ensemble des contraintes d'agrément à l'exception des contraintes de niveau vibratoire.

10. Procédé de sélection selon la revendication 8 et 9, **caractérisé en ce qu'**il comporte un mécanisme de consolidation final entre les vecteurs d'éligibilité **(*****Vtx_drb_norm_arb**_****dls*)** (***Vtx_drb_forc**_**arb_dls)*** de la quatrième étape, avec et sans prise en compte du niveau vibratoire.

## Patentansprüche

1. Verfahren zur Auswahl des Zielzustands eines Fahrzeugantriebsstrangs, welcher mindestens einen Verbrennungsmotor und eine elektrische Maschine über ein Getriebe mit den Rädern des Fahrzeugs verbindet, aus einem Satz von Zuständen, die an dem Getriebe zur Verfügung stehen und durch unterschiedliche Kombinationen von Koppel- und Getriebeelementen desselben definiert werden, um die Übertragung des Drehmoments des Verbrennungsmotors und der elektrischen Maschine in Richtung der Räder mittels eines oder mehrerer Übersetzungsverhältnisse sicherzustellen, wobei die Auswahl des Zielzustands einer Filtersequenz folgt, die anhand einer Liste verfügbarer Zustände (***Vtx_avl_dls***) aufeinanderfolgende wählbare Zustandssätze in Abhängigkeit von den kumulierten Verhaltensanforderungen bestimmt, **dadurch gekennzeichnet, dass** es nacheinander Folgendes umfasst:
- einen ersten Schritt des Initialisierens eines Vektors der Wählbarkeit und der Berücksichtigung der verfügbaren Zustände,
- einen zweiten Schritt des Filterns, der mit einer Mensch-Maschine-Schnittstelle des Fahrers und mit dem eingestellten Energiemodus in Zusammenhang steht,
- einen dritten Schritt des Filterns, der mit den Geschwindigkeitsanforderungen in Zusammenhang steht, und
- einen vierten Schritt des Filterns, der mit den Kraftanforderungen des Antriebsstrangs in Zusammenhang steht,
und dass es im Anschluss an die gesamten Schritte des Filterns einen endgültigen Wählbarkeitsvektor (***Vtx_drb***_***arb_dls***) produziert, der den Satz der wählbaren Zustände in Abhängigkeit von den Verhaltensanforderungen darstellt.

2. Auswahlverfahren nach Anspruch 1, **dadurch gekennzeichnet, dass** der erste Schritt des Filterns einen Vektor (***Vbx_navl_dls***), der für gewisse Zustände das Vorhandensein einer Fehlfunktion signalisiert, einen Vektor (***Vtx_avl_dls***), der die ergänzende Liste der verfügbaren Zustände angibt, und einen Vektor (***Vtx_zev_avl_dls***), der die im reinen Elektromodus zulässigen Zustände definiert, liefert.

3. Auswahlverfahren nach Anspruch 2, **dadurch gekennzeichnet, dass** der zweite Schritt des Filterns ein Ausgangssignal (***Vtx**_**mmi_arb_dls***) liefert, welches die wählbaren Zustände in Abhängigkeit von der Position des Schalthebels und dem geforderten Energiemodus definiert.

4. Auswahlverfahren nach Anspruch 3, **dadurch gekennzeichnet, dass** der vierte Schritt des Filterns die aktuelle Geschwindigkeit mit den minimalen und maximalen Schwellenwerten vergleicht, die zu jedem wählbaren Zustand des Vektors **(*Vtx_mmi_arb_dls***) gehören.

5. Auswahlverfahren nach Anspruch 4, **dadurch gekennzeichnet, dass** der vierte Schritt parallel dazu überprüft, ob die aktuelle Geschwindigkeit für jeden wählbaren Zustand des Vektors **(*****Vtx**_**mmi_arb_dls***) die minimal und maximal zulässigen Geschwindigkeiten für diese Zustände bezogen auf ihr Schwingungsniveau einhält.

6. Auswahlverfahren nach einem der vorhergehenden Ansprüche, **dadurch gekennzeichnet, dass** der vierte Schritt einen Mechanismus zum Begrenzen der Kraftanforderungen auf die höchste Kraft umfasst, der die in jedem wählbaren Zustand verfügbaren maximalen Kräfte in ihrem Betriebsbereich vergleicht, um die Kraftanforderungen auf die höchste unter ihnen zu begrenzen.

7. Auswahlverfahren nach einem der Ansprüche 1 bis 5, **dadurch gekennzeichnet, dass** der vierte Schritt einen Mechanismus zum Erkennen der Zustände des Herauf- oder Herunterschaltens und des aktuellen Zustands umfasst.

8. Auswahlverfahren nach einem der Ansprüche 1 bis 5, **dadurch gekennzeichnet, dass** der vierte Schritt einen Mechanismus des Filterns mit Berücksichtigung des Schwingungsniveaus für den Satz der wählbaren Zustände umfasst, mit Ausnahme der unterschiedlichen Rückwärtsgänge und des neutralen Zustands.

9. Auswahlverfahren nach Anspruch 1 bis 5, **dadurch gekennzeichnet, dass** der vierte Schritt einen Mechanismus des Filterns ohne Berücksichtigung des Schwingungsniveaus umfasst, der einen Vektor liefert, der die Zustände des Antriebsstrangs darstellt, die den Satz der Verhaltensanforderungen einhalten, mit Ausnahme der Anforderungen an das Schwingungsniveau.

10. Auswahlverfahren nach Anspruch 8 und 9, **dadurch gekennzeichnet, dass** es einen Mechanismus zum endgültigen Entscheiden zwischen den Wählbarkeitsvektoren (***Vtx_drb_norm**_**arb_dls***) (***Vtx_drb_forc_arb_dls***) des vierten Schritts mit und ohne Berücksichtigung des Schwingungsniveaus umfasst.

## Claims

1. Method for selecting the target state of a vehicle drivetrain connecting at least an internal combustion engine and an electric machine to the wheels of the vehicle by means of a transmission, from a set of states present in the transmission and defined by different combinations of couplers and reduction gears thereof in order to transfer torque from the internal combustion engine and from the electric machine to the wheels in one or more gear reduction ratios, the selection of the target state conforming to a sequence of filtering operations that determine, from a list of available states (***Vtx_avl_dls***), sets of successive eligible states as a function of cumulative comfort constraints, **characterized in that** it comprises, in succession:
- a first step of initializing an eligibility vector and of acknowledging the available states,
- a second step of filtering, associated with a driver man-machine interface and with the power mode engaged,
- a third step of filtering, associated with the speed constraints, and
- a fourth step of filtering, associated with the drivetrain force constraints,
and **in that**, at the end of all the filtering steps, it produces a final eligibility vector (***Vtx_drb***_***arb_dls***) which represents all of the eligible states as a function of the comfort constraints.

2. Selection method according to Claim 1, **characterized in that** the first filtering step delivers a vector (***Vbx_navl_dls***) indicating the presence of a malfunction in certain states, a vector (***Vtx_avl_dls***) providing the complementary list of the available states, and a vector (***Vtx_zev_avl_dls***) defining the states allowed in all-electric mode.

3. Selection method according to Claim 2, **characterized in that** the second filtering step delivers an output signal (***Vtx**_**mmi_arb_dls***) which defines the eligible states as a function of the position of the gear lever and of the power mode required.

4. Selection method according to Claim 3, **characterized in that** the fourth filtering step compares the current speed with the minimum and maximum thresholds specific to each eligible state of the vector (***Vtx_mmi_arb_dls***)*.*

5. Selection method according to Claim 4, **characterized in that** the fourth step in parallel verifies that the current speed in each eligible state of the vector (***Vtx_mmi_arb_dls***) complies with the minimum and maximum permissible speeds in these states for their level of vibration.

6. Selection method according to one of the preceding claims, **characterized in that** the fourth step comprises a mechanism for saturating the force constraints on the highest force which compares the maximum available forces in each eligible state over their operating range in order to saturate the force constraints on the highest one of them.

7. Selection method according to one of Claims 1 to 5, **characterized in that** the fourth step comprises a mechanism for recognizing states of moving up or moving down and the current state.

8. Selection method according to one of Claims 1 to 5, **characterized in that** the fourth step comprises a filtering mechanism that takes into consideration the level of vibration across all of the eligible states except the various reverse gears and the neutral state.

9. Selection method according to Claim 1 to 5, **characterized in that** the fourth step comprises a filtering mechanism that does not take account of the level of vibration and delivers a vector that represents the states of the drivetrain conforming to all of the comfort constraints with the exception of the vibration level constraints.

10. Selection method according to Claims 8 and 9, **characterized in that** it comprises a mechanism for finally consolidating the eligibility vectors (***Vtx**_**drb_norm_arb_dls***) and (***Vtx_drb**_**forc_arb_dls***) of the fourth step, with and without taking the level of vibration into consideration.
